# EUROPEAN PATENT APPLICATION

(11) **EP 4 462 911 A1**
(43) Date of publication of application: **13.11.2024**
(21) Application number: 23737089.5
(22) Date of filing: 05.01.2023
(51) Int. Cl.: H04W 72/04

(54) **TRANSMISSION DETERMINATION METHOD AND APPARATUS, DEVICE, AND MEDIUM**

(30) Priority: 06.01.2022 CN 202210010559
(71) Applicant: VIVO MOBILE COMMUNICATION CO., LTD., Dongguan, Guangdong 523863 (CN)
(72) Inventor: LI, Na, Dongguan, Guangdong 523863 (CN); WANG, Lihui, Dongguan, Guangdong 523863 (CN); PAN, Xueming, Dongguan, Guangdong 523863 (CN)
(74) Representative: Murgitroyd & Company
(86) International application number: PCT/CN2023/070649
(87) International publication number: WO 2023/131227

(57) **Abstract**

This application discloses a transmission determining method and apparatus, a device, and a medium, and belongs to the field of communication technologies. The transmission determining method according to embodiments of this application includes: obtaining, by UE, a target configuration; and performing, by the UE, a target operation based on the target configuration, where the target configuration is used for configuring a frequency domain transmission direction and a time domain transmission direction of a first resource.

## Description

### CROSS-REFERENCE TO RELATED APPLICATION

This application claims priority to Chinese Patent Application No. 202210010559.7 filed in China on January 6, 2022, the entire content of which is hereby incorporated by reference.

### TECHNICAL FIELD

This application relates to the field of communication technologies, and specifically, to a transmission determining method and apparatus, a device, and a medium.

### BACKGROUND

To support flexible duplex/full duplex/duplex evolution on a network side, different frequency domain resource transmission directions need to be configured differently. However, a (User Equipment, UE) side only supports half-duplex operations, and corresponding UE behavior needs to be specified. For example, when the network side configures (or indicates) not only downlink receiving but also uplink sending and/or flexible symbols on different frequency resources at a same time/slot/symbol, behavior of the half-duplex UE needs to be specified.

Therefore, how to determine the behavior of the UE when the UE has two configurations is an urgent problem to be resolved currently.

### SUMMARY

Embodiments of this application provide a transmission determining method and apparatus, a device, and a medium, to determine behavior of UE when the UE has two configurations.

According to a first aspect, a transmission determining method is provided, including: obtaining, by UE, a target configuration; and performing, by the UE, a target operation based on the target configuration, where the target configuration is used for configuring a frequency domain transmission direction and a time domain transmission direction of a first resource.

According to a second aspect, a transmission determining apparatus is provided, including: an obtaining module, configured to obtain a target configuration; and an execution module, configured to perform a target operation based on the target configuration obtained by the obtaining module, where the target configuration is used for configuring a frequency domain transmission direction and a time domain transmission direction of a first resource.

According to a third aspect, a transmission determining method is provided, including: determining, by a network side device, a first frequency domain configuration according to a target configuration rule; and sending, by the network side device, the first frequency domain configuration to user equipment UE, where the target configuration rule includes: only a flexible time domain resource with a time domain semi-persistent configuration is allowed to be updated, and a transmission direction of a downlink time domain resource or an uplink time domain resource with the time domain semi-persistent configuration cannot be updated.

According to a fourth aspect, a transmission determining apparatus is provided, including: a determining module, configured to determine a first frequency domain configuration according to a target configuration rule; and a transmission module, configured to send the first frequency domain configuration determined by the determining module to UE, where the target configuration rule includes: only a flexible time domain resource with a time domain semi-persistent configuration is allowed to be updated, and a transmission direction of a downlink time domain resource or an uplink time domain resource with the time domain semi-persistent configuration cannot be updated.

According to a fifth aspect, UE is provided. The terminal includes a processor and a memory. The memory stores a program or instructions executable on the processor. The program or the instructions, when executed by the processor, implement the steps of the method according to the first aspect.

According to a sixth aspect, UE is provided, including a processor and a communication interface. The processor is configured to obtain a target configuration, and is further configured to perform a target operation based on the target configuration obtained by the obtaining module, where the target configuration is used for configuring a frequency domain transmission direction and a time domain transmission direction of a first resource.

According to a seventh aspect, a network side device is provided. The network side device includes a processor and a memory. The memory stores a program or instructions executable on the processor. The program or the instructions, when executed by the processor, implement the steps of the method according to the first aspect.

According to an eighth aspect, a network side device is provided, including a processor and a communication interface. The processor is configured to determine a first frequency domain configuration according to a target configuration rule. The communication interface is configured to send the first frequency domain configuration determined by the determining module to UE, where the target configuration rule includes: only a flexible time domain resource with a time domain semi-persistent configuration is allowed to be updated, and a transmission direction of a downlink time domain resource or an uplink time domain resource with the time domain semi-persistent configuration cannot be updated.

According to a ninth aspect, a communication system is provided, including: a terminal and a network side device. The terminal may be configured to perform the steps of the transmission determining method according to the first aspect. The network side device may be configured to perform the steps of the transmission determining method according to the third aspect.

According to a tenth aspect, a readable storage medium is provided, storing a program or instructions, the program or the instructions, when executed by a processor, implementing the steps of the method according to the first aspect or the steps of the method according to the third aspect.

According to an eleventh aspect, a chip is provided, where the chip includes a processor and a communication interface, the communication interface is coupled to the processor, and the processor is configured to run a program or instructions, to implement the method according to the first aspect, or implement the method according to the third aspect.

According to a twelfth aspect, a computer program/program product is provided, where the computer program/program product is stored in a storage medium, and the computer program/program product is executed by at least one processor to implement the steps of the method according to the first aspect or the third aspect.

In embodiments of this application, after obtaining the target configuration for configuring the frequency domain transmission direction and the time domain transmission direction of the first resource, the UE can perform the target operation based on the target configuration, thereby improving effectiveness of a communication system.

### BRIEF DESCRIPTION OF THE DRAWINGS

FIG. 1 is a schematic diagram of a system architecture of a wireless communication system according to an embodiment of this application;
FIG. 2 is a first schematic diagram of a resource relationship according to an embodiment of this application;
FIG. 3 is a second schematic diagram of a resource relationship according to an embodiment of this application;
FIG. 4 is a third schematic diagram of a resource relationship according to an embodiment of this application;
FIG. 5 is a fourth schematic diagram of a resource relationship according to an embodiment of this application;
FIG. 6 is a first method flowchart of a transmission determining method according to an embodiment of this application;
FIG. 7 is a second method flowchart of a transmission determining method according to an embodiment of this application;
FIG. 8 is a fifth schematic diagram of a resource relationship according to an embodiment of this application;
FIG. 9 is a sixth schematic diagram of a resource relationship according to an embodiment of this application;
FIG. 10 is a seventh schematic diagram of a resource relationship according to an embodiment of this application;
FIG. 11 is an eighth schematic diagram of a resource relationship according to an embodiment of this application;
FIG. 12 is a ninth schematic diagram of a resource relationship according to an embodiment of this application;
FIG. 13 is a tenth schematic diagram of a resource relationship according to an embodiment of this application;
FIG. 14 is an eleventh schematic diagram of a resource relationship according to an embodiment of this application;
FIG. 15 is a first schematic structural diagram of a transmission determining apparatus according to an embodiment of this application;
FIG. 16 is a second schematic structural diagram of a transmission determining apparatus according to an embodiment of this application;
FIG. 17 is a third schematic structural diagram of a transmission determining apparatus according to an embodiment of this application;
FIG. 18 is a schematic structural diagram of a communication device according to an embodiment of this application;
FIG. 19 is a schematic diagram of a hardware structure of UE according to an embodiment of this application; and
FIG. 20 is a schematic diagram of a hardware structure of a network side device according to an embodiment of this application.

### DETAILED DESCRIPTION

The technical solutions in embodiments of this application are clearly described below with reference to the accompanying drawings in embodiments of this application. Apparently, the described embodiments are some rather than all of embodiments of this application. All other embodiments obtained by a person of ordinary skill in the art based on embodiments of this application fall within the protection scope of this application.

The specification and claims of this application, and terms "first" and "second" are used to distinguish similar objects, but are not used to describe a specific sequence or order. It should be understood that the terms used in this way are interchangeable in a proper case, so that embodiments of this application can be implemented in other orders than the orders illustrated or described herein. Moreover, the objects distinguished by "first" and "second" are usually of one type, and the quantity of objects is not limited. For example, there may be one or more first objects. In addition, "and/or" in the description and claims represents at least one of connected objects, and the character "/" generally indicates an "or" relationship between associated objects.

It should be noted that the technologies described in embodiments of this application are not limited to a long term evolution (Long Term Evolution, LTE)/LTE-advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single Carrier Frequency Division Multiple Access (Single Carrier Frequency Division Multiple Access, SC-FDMA), and other systems. The terms "system" and "network" may be used interchangeably in embodiments of this application. The technology described can be applied to the systems and radio technologies described above, and can also be applied to other systems and radio technologies. The following description describes a new radio (New Radio, NR) system for illustrative purposes, and NR terminology is used in most of the description below. These technologies are also applicable to applications other than NR system applications, for example, the 6th generation (6th Generation, 6G) communication system.

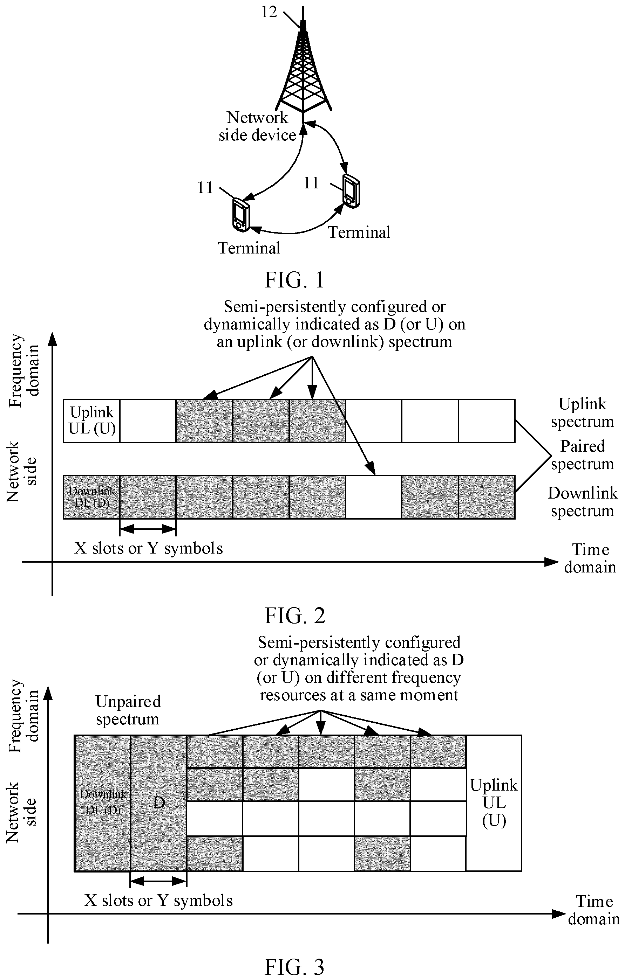

FIG. 1 is a block diagram of a wireless communication system to which an embodiment of this application can be applied. The wireless communication system includes a terminal 11 and a network side device 12. The terminal 11 may be a terminal side device such as a mobile phone, a tablet personal computer (Tablet Personal Computer), a laptop computer (Laptop Computer) or referred to as a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (augmented reality, AR)/virtual reality (virtual reality, VR) device, a robot, a wearable device (Wearable Device), vehicle user equipment (VUE), pedestrian user equipment (PUE), smart home (home equipment with wireless communication functions, such as a refrigerator, a TV, a washing machine, or furniture), a game console, a personal computer (personal computer, PC), a teller machine, or a self-service machine. The wearable device includes: a smart watch, a smart band, smart headphones, smart glasses, smart jewelry (a smart bracelet, a smart bracelet, a smart ring, a smart necklace, a smart anklet, a smart anklet, and the like), a smart wristband, smart clothing, and the like. It should be noted that in embodiments of this application, a specific type of the terminal 11 is not limited. The network side device 12 may include an access network device or a core network device, where the access network device 12 may also be referred to as a radio access network device, a radio access network (Radio Access Network, RAN), a radio access network function, or a radio access network unit. The access network device 12 may include a base station, a WLAN access point, a WiFi node, or the like. The base station may be referred to as a Node B, an evolved Node B (eNB), an access point, a base transceiver station (Base Transceiver Station, BTS), a radio base station, a radio transceiver, a basic service set (Basic Service Set, BSS), an extended service set (Extended Service Set, ESS), a Home Node B, a Home evolved Node B, a transmitting receiving point (Transmitting Receiving Point, TRP), or another suitable term in the field. As long as the same technical effect is achieved, the base station is not limited to a specific technical vocabulary. It should be noted that, only a base station in an NR system is used as an example in embodiments of this application, and the specific type of the base station is not limited.

Some technical terms involved in embodiments of this application are exemplified below.

### 1. Bandwidth part (Bandwidth Part, BWP)

In NR, a network side configures a BWP and/or a carrier for data transmission for UE. In general, a bandwidth of the UE may change dynamically. For example, a service volume of the UE is large at a first moment, and a system configures a large bandwidth (BWP1) for the UE; and the service volume of the UE is small at a second moment, and the system configures a small bandwidth (BWP2) for the UE, to meet basic communication requirements. At a third moment, the system finds that there is a wide range of frequency selective fading in the BWP1, or that resources are scarce in a frequency range of the BWP1, and then configures a new bandwidth (BWP3) for the UE. As can be learned, the BWPs may be different from each other in frequency and bandwidth, and each BWP may correspond to a different configuration. For example, a subcarrier spacing, a cyclic prefix (Cyclic prefix, CP) type, a synchronization signal block (Synchronization Signal and PBCH block, SSB) period, and the like of each BWP may all be configured differentially to adapt to different services.

It should be noted that the BWP technology is mainly advantageous in the following four respects:
(1) The UE does not need to support all bandwidths, but only needs to meet a minimum bandwidth requirement. This is conducive to development of low-cost terminals.
(2) When the service volume of the UE is not large, the UE may switch to low-bandwidth operation. This can reduce power consumption significantly.
(3) Forward compatibility of the 5G technology allows a new technology added to 5G to directly run on a new BWP, thereby ensuring forward compatibility of a system.
(4) BWPs are dynamically configured for a service to meet service requirements.

### 2. Slot format

In LTE, uplink-downlink configurations are in units of slots, namely, subframes. There are seven configurations for LTE TDD.

In NR, an uplink-downlink configuration is based on a granularity of symbol, and the configuration is more flexible.

A specific configuration process is as follows:
(1) A semi-persistent uplink-downlink configuration of a cell is configured first.
   A higher layer provides a parameter TDD-UL-DL-ConfigurationCommon, where the parameter includes a reference subcarrier spacing u (reference SCS configuration) and pattern1, and pattern1 further includes:
   a slot configuration period (slot configuration period) P ms;
   a number of downlink slots Dslots (number of slots with only downlink symbols);
   a number of downlink symbols Dsym (number of downlink symbols);
   a number of uplink slots Uslots (number of slots with only uplink symbols); and
   a number of uplink symbols Usym (number of uplink symbols).
(2) A UE-dedicated uplink-downlink configuration is then configured.

If a higher layer parameter TDD-UL-DL-ConfigDedicated is further provided based on the configuration in (1), a flexible symbol configured in the parameter TDD-UL-DL-ConfigurationCommon may be configured for TDD-UL-DL-ConfigDedicated. In other words, an uplink-downlink symbol configured in (1) cannot be changed, but the flexible symbol may be overwritten in TDD-UL-DL-ConfigDedicated.

For example, the parameter provides a series of slot configurations. For each slot configuration, a slot index slot index and a symbol configuration are provided. For a slot specified by the slot index:
if symbols = allDownlink, all slots in the slot are downlink (all symbols in the slot are downlink);
if symbols = allUplink, all slots in the slot are uplink (all symbols in the slot are uplink); and
if symbols = explicit, downlink symbols provided by a parameter (nrofDownlinkSymbols) come first (nrofDownlinkSymbols provides a number of downlink first).

To be specific, if symbols = explicit, the parameter nrofDownlinkSymbols provides the number of downlink symbols, nrofUplinkSymbols provides a number of uplink symbols, the downlink symbols are at the front, and the uplink symbols are at the end. If the parameter nrofDownlinkSymbols is not provided, there are no downlink symbols; and if nrofUplinkSymbols is not provided, there are no uplink symbols. If there are remaining symbols after configuration, the remaining symbols are flexible symbols X. A reference subcarrier spacing reference SCS configuration in (2) is the same as that in (1).

(3) Dynamic downlink control information (Downlink Control Information, DCI) uplink-downlink configuration

An uplink-downlink configuration implemented through dynamic DCI is implemented through a DCI format 2-0, or directly through uplink-downlink data scheduling of a DCI format 0-0/0-1/1-0/1-1. The DCI format 2-0 is dedicated for an SFI indication. A slot format indication (Slot Format Indication, SFI) mainly implements a periodic frame structure configuration based on a slot format that can be supported by a single slot. To be specific, starting from receiving the DCI format 2-0 and continuing for slots of a physical downlink control channel (Physical downlink control channel, PDCCH) monitoring periodicity, such slots are all configured according to an indication of the SFI in the DCI. A maximum number of formats supported by a single slot is 256, and a number of standardized formats is 56.

### 3. Full duplex (Full duplex)/flexible duplex (flexible duplex)/duplex evolution (duplex evolution)

Existing spectrum formats deployed in networks are fixed, and mainly include the following two types:
time division duplexing (Time Division Duplexing, TDD), where one radio frequency point is shared for sending and receiving, and an uplink and a downlink use different slots for communication; and
frequency division duplexing (Frequency Division Duplexing, FDD), where different radio frequency points are used for communication in sending and receiving.

It should be noted that the foregoing two formats both have advantages and disadvantages. Uplink and downlink of the TDD system are differentiated by time, and frequency bands with symmetric bandwidths are not required. Therefore, TDD may use fragmented frequency bands, and is suitable for services with obvious uplink and downlink asymmetry. However, TDD is not conducive to a delay-sensitive service. Moreover, transmission time in TDD is only about half that in FDD. Therefore, override or throughput is limited. However, when the FDD system supports asymmetric services, spectrum utilization is greatly reduced. Therefore, future mobile communication requires more flexible use of a spectrum. Flexible/full duplex/duplex evolution on a network side is considered to be a promising technology that can improve spectrum utilization, improve uplink override, and reduce a delay of a delay-sensitive service. However, on a terminal side, limited to implementation complexity, only half-duplex operations can be supported on the terminal side.

Features of Rel-18 network side flexible duplex/full duplex and user/terminal side half duplex operations are described below.

As shown in FIG. 2, for a symmetric spectrum of FDD, an uplink spectrum or a downlink spectrum of FDD may be semi-persistently configured or dynamically indicated as downlink or uplink transmission on specific slots/symbols.

As shown in FIG. 3, for an asymmetric spectrum of TDD, different frequency domain resources on specific slots/symbols of TDD may be semi-persistently configured or dynamically indicated as having both uplink slots/symbols and downlink slots/symbols.

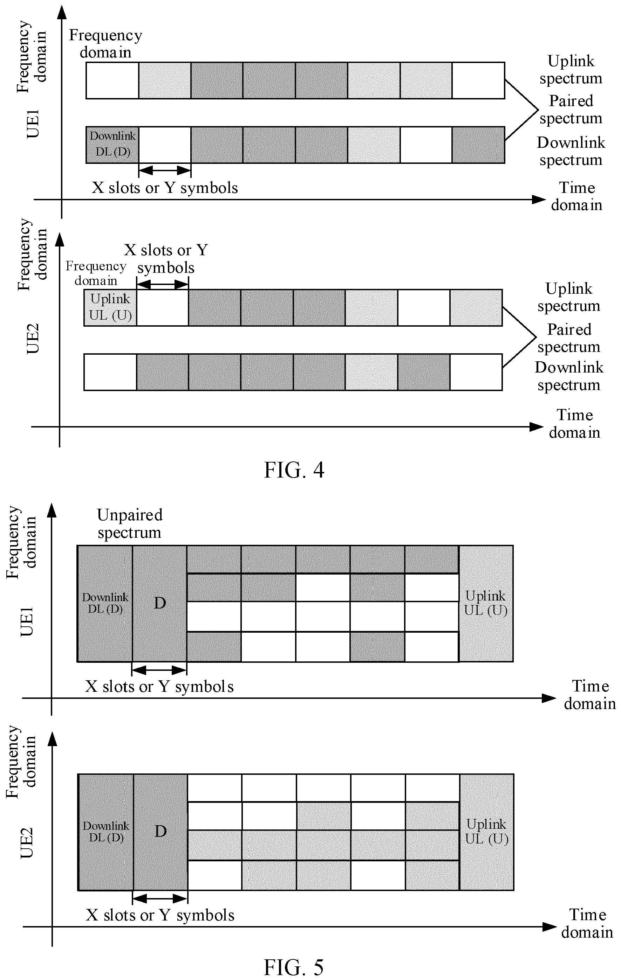

As shown in FIG. 4 and FIG. 5, a half-duplex terminal can only perform uplink sending or downlink receiving at a same moment. In other words, the terminal cannot send and receive signals at a same moment. It should be noted that FIG. 4 corresponds to FIG. 2 on the network side and FIG. 5 corresponds to FIG. 3 on the network side.

It should be noted that, whether for a symmetric spectrum or an asymmetric spectrum, it is necessary to introduce new signaling or enhance existing signaling, to inform the terminal of a transmission/reception direction, namely, uplink (U), downlink (D), or flexible (flexible, F), in time, namely, in which slots/symbols, and in frequency, namely, on which sub-bands (sub-bands), sub-carriers (sub-carriers), or resource blocks (Resource Blocks, RBs), or on which RB set (RB set) or RB group (RB group).

In the Rel-18 flexible duplex/full duplex/duplex evolution system, at a same moment, a terminal that does not have full-duplex capabilities can only either perform sending or perform receiving; while the network side can perform sending and receiving simultaneously. Therefore, different terminals may perform sending and receiving through different frequency resources at the same moment, as shown in FIG. 2 and FIG. 3, and FIG. 4 and FIG. 5. Correspondingly, the network side needs to provide signaling for the terminal to configure and/or indicate transmission directions of different frequency resources, namely, downlink D, uplink U, and flexible F (or referred to as unknown, which mainly means that a direction is uncertain and can be used for both uplink and downlink transmission direction configurations), to implement coexistence with an adjacent channel, and reduce interference to the adjacent channel. In addition, for effective coexistence with a legacy terminal (legacy UE or referred to as UE of a version prior to Rel-18) and other terminals with different service requirements in the same network, different frequency resources in a same time unit are indicated as uplink, downlink, or flexible. Therefore, for the terminal that does not have full-duplex capabilities, terminal behavior needs to be specified, and a transmission direction in the time unit, namely, D, U, or F, needs to be specified, so that downlink receiving/measurement/monitoring or uplink transmission is performed, or neither reception nor transmission is performed (where the terminal does nothing, to reduce power consumption). Meanwhile, when the network side indicates/configures both downlink receiving and uplink sending and/or indicates flexible symbols on different frequency resources at a same time/slot/symbol, behavior of the half-duplex terminal needs to be specified.

Further, for configured downlink transmission, for example, a semi-persistent scheduling (Semi-Persistent Scheduling, SPS) physical downlink shared channel (Physical downlink shared channel, PDSCH), or uplink transmission, are all periodic transmission. For the flexible duplex/full duplex/duplex evolution system, when semi-persistent DL time domain resources and/or flexible time domain resources are updated to UL time domain resources (that is, configured as UL through frequency domain resource configuration signaling), and the SPS PDSCH overlaps (including partial overlapping, or overlapping in both time domain and frequency domain) the time domain resources updated to UL, a sequence of resolving a resource conflict between the SPS PDSCH and the time domain resources updated to UL and a conflict between SPS PDSCHs/between the SPS PDSCH and a dynamic grant (dynamic grant, DG) PDSCH needs to be discussed. To be specific, when DL/flexible resources are updated to UL resources and/or flexible resources, the SPS PDSCH may conflict with the resources updated to UL and/or resources updated to flexible. In addition, when a plurality of SPS PDSCHs have overlapping time domain resources or a number of SPS PDSCHs within a slot exceeds a reception capability of the UE, the UE needs to determine which SPS PDSCHs to receive. This application provides a sequence of resolving the resource conflict between the SPS PDSCH and the resources updated to UL and/or the resources updated to flexible and a conflict between SPS PDSCHs/between the SPS PDSCH and the DG PDSCH.

A transmission determining method and apparatus, a device, and a medium according to embodiments of this application are described in detail below through some embodiments and application scenarios thereof with reference to the accompanying drawings.

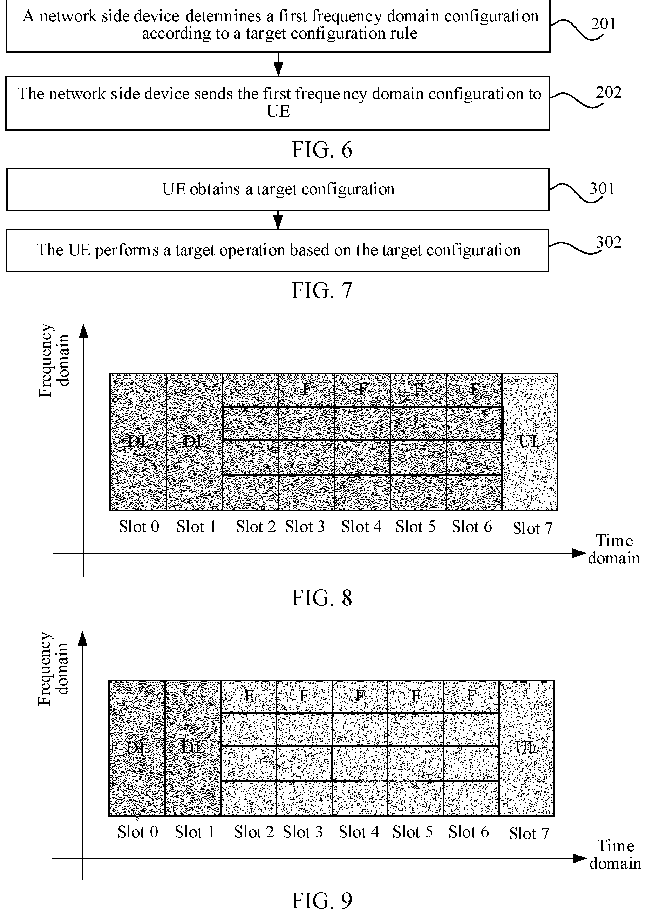

An embodiment of this application provides a transmission determining method. As shown in FIG. 6, the transmission determining method may include the following steps 201 and 202:
Step 201: A network side device determines a first frequency domain configuration according to a target configuration rule.
Step 202: The network side device sends the first frequency domain configuration to UE.

The target configuration rule includes: only a flexible time domain resource with a time domain semi-persistent configuration is allowed to be updated, and a transmission direction of a downlink time domain resource or an uplink time domain resource with the time domain semi-persistent configuration cannot be updated.

In some possible embodiments, a time domain resource with the time domain semi-persistent configuration includes a time domain resource configured through at least one of the following:
a time domain semi-persistent TDD uplink-downlink configuration;
a semi-persistent downlink transmission configuration configured through higher layer or radio resource control (Radio Resource Control, RRC) signaling;
a semi-persistent uplink transmission configuration configured through higher layer or RRC signaling;
an SSB configured through higher layer signaling; or
a control resource set configured by a master information block (Master Information Block, MIB) or a system information block (System Information Block, SIB) and used for a TypeO-PDCCH CSS (Common Search Space, common search space).

In some possible examples, the time domain semi-persistent TDD uplink-downlink configuration includes at least one of the following:
a common TDD uplink-downlink configuration, for example, tdd-UL-DL-ConfigurationCommon; or
a UE-dedicated TDD uplink-downlink configuration, for example, tdd-UL-DL-ConfigurationDedicated.

In some possible examples, for a flexible duplex or full duplex configuration, a frequency domain configuration only allows a flexible time domain resource (for example, a slot or symbol) with the time domain semi-persistent configuration to be updated, and a transmission direction of a DL resource and/or a UL resource with the time domain semi-persistent configuration cannot be updated. To be specific, the terminal does not expect the DL resource with the time domain semi-persistent configuration to be configured as UL by a frequency domain resource, or the terminal does not expect the UL resource with the time domain semi-persistent configuration to be configured as a DL resource by the frequency domain resource.

For example, a DL time domain resource with the time domain semi-persistent configuration includes a DL time domain resource configured through at least one of the following signaling:
(1) time domain tdd-UL-DL-ConfigurationCommon;
(2) time domain tdd-UL-DL-ConfigurationDedicated;
(3) semi-persistent downlink transmission configuration configured through a higher layer or RRC, where for example, symbol resources where a PDCCH, a PDSCH, a channel state information (Channel State Information, CSI) reference signal (CSI Reference Signal, CSI-RS), and the like are configured are DL symbols;
(4) an SSB sent to the UE according to an indication of ssb-PositionsInBurst in SIB1 or ssb-PositionsInBurst in ServingCellConfigCommon, where a symbol resource where the SSB is configured is a DL symbol; or
(5) a control resource set (control resource set, CORESET for short) configured by pdcch-ConfigSIB 1 in a MIB and used for a TypeO-PDCCH CSS, where a symbol resource where the control resource set is configured is a DL symbol.

For example, a UL time domain resource with the time domain semi-persistent configuration includes a UL time domain resource configured through at least one of the following signaling:
(1) time domain tdd-UL-DL-ConfigurationCommon;
(2) time domain tdd-UL-DL-ConfigurationDedicated; or
(3) semi-persistent uplink transmission configured through a higher layer or RRC, where for example, symbol resources where an SRS, a PUSCH, a PUCCH, a PRACH, and the like are configured are UL symbols.

In the transmission determining method according to this embodiment of this application, the network side device determines the first frequency domain configuration according to the target configuration rule, and then sends the first frequency domain configuration to the UE. Only the network side device is allowed to update the flexible time domain resource with the time domain semi-persistent configuration, and the transmission direction of the downlink time domain resource or the uplink time domain resource with the time domain semi-persistent configuration cannot be updated. In other words, the network side can only configure different frequency domains of the flexible time domain resource with the time domain semi-persistent configuration in different transmission directions, thereby improving effectiveness of a communication system.

An embodiment of this application provides a transmission determining method. As shown in FIG. 7, the transmission determining method may include the following steps 301 and 302:
Step 301: UE obtains a target configuration.
Step 302: The UE performs a target operation based on the target configuration.

In this embodiment of this application, the target configuration is used for configuring a frequency domain transmission direction and a time domain transmission direction of a first resource.

In this embodiment of this application, the target configuration includes a first frequency domain configuration and a first time domain configuration. The first frequency domain configuration is used for configuring the frequency domain transmission direction of the first resource, and the first time domain configuration is used for configuring the time domain transmission direction of the first resource.

In some possible embodiments, the frequency domain transmission direction of the first resource configured in the first frequency domain configuration is different from the time domain transmission direction of the first resource configured in the first time domain configuration.

In some possible embodiments, the first resource includes N frequency domain resources and M time domain resources;
the first frequency domain configuration indicates transmission formats of the N frequency domain resources, where N is a positive integer;
the first time domain configuration indicates transmission formats of the M time domain resources, where M is a positive integer; and
the N frequency domain resources are located on the M time domain resources.

For example, the transmission format indicates a transmission direction. To be specific, a transmission format of a frequency domain resource indicates a frequency domain transmission direction of the frequency domain resource, and a transmission format of a time domain resource indicates a frequency domain transmission direction of the time domain resource.

For example, the transmission format includes any one of uplink, downlink, or flexible.

In the transmission determining method according to embodiments of this application, after obtaining the target configuration for configuring the frequency domain transmission direction and the time domain transmission direction of the first resource, the UE can perform the target operation based on the target configuration, thereby improving effectiveness of a communication system.

In some possible embodiments, step 302 may include the following step 302a:
Step 302a: The UE performs transmission on the first resource based on the first frequency domain configuration.

For example, when the frequency domain transmission direction of the first resource configured in the first frequency domain configuration is different from the time domain transmission direction of the first resource configured in the first time domain configuration, the UE performs transmission on the first resource preferentially based on the first frequency domain configuration.

For example, in current technologies, semi-persistent signaling, for example, TDD-UL-DL-ConfigurationCommon and/or TDD-UL-DL-ConfigDedicated, may be configured as a downlink (referred to as D for short) time domain resource (a slot and/or a symbol), an uplink (referred to as U for short) time domain resource, and a flexible (referred to as F for short) time domain resource. As shown in FIG. 8, a slot 0 to a slot 6 in FIG. 8 each are configured as a DL slot, and a slot 7 is an UL slot. Meanwhile, as shown in FIG. 9, a slot 0 and a slot 1 in FIG. 9 each are configured as a DL slot, a slot 2 to a slot 6 each are configured as a flexible slot, and a slot 7 is an UL slot.

In addition, in a flexible duplex/full duplex/duplex evolution network, the UE may further receive other higher layer signaling or dynamic signaling such as frequency domain format indication information indicating which frequency domain resources (for example, RBs, an RB set, an RB group, a sub-BWP, and a sub-band (where for simplicity, a frequency domain granularity of the following frequency domain resource configuration is denoted by an RB set)) within a BWP are DL/UL/F. In this case, configuration signaling used by a base station or the like for performing uplink-downlink configuration on different frequency resources takes precedence over the TDD-UL-DL-ConfigurationCommon, and/or the TDD-UL-DL-ConfigDedicated, and/or D, U, and/or F configured through an SFI. In other words, through the signaling, at least one of D, U, and F configured through the conventional TDD-UL-DL-ConfigurationCommon, and/or the TDD-UL-DL-ConfigDedicated, and/or the SFI may be updated.

In a manner, through the signaling, F configured in semi-persistent TDD-UL-DL-ConfigurationCommon and/or TDD-UL-DL-ConfigDedicated can only be configured to UL/DL. In other words, the network side can only configure different frequency domains of a slot or a symbol in which F configured in the semi-persistent TDD-UL-DL-ConfigurationCommon and/or TDD-UL-DL-ConfigDedicated is located in different transmission directions, for example, D or U.

In the uplink-downlink configuration shown in FIG. 8, this signaling cannot be changed.

In the uplink-downlink configuration shown in FIG. 9, the base station may update, through other signaling, F time domain resources configured through the TDD-UL-DL-ConfigurationCommon and/or the TDD-UL-DL-ConfigDedicated.

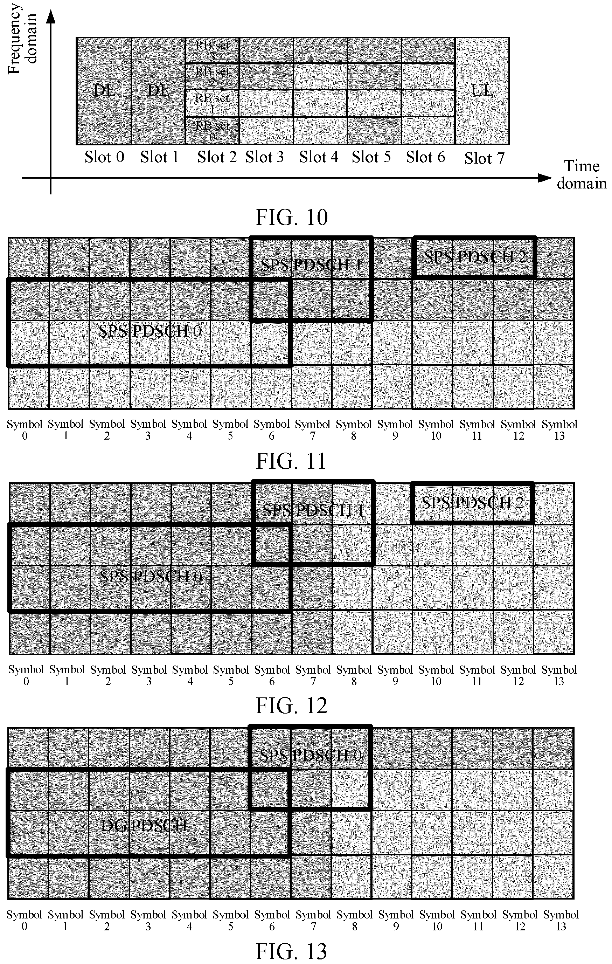

As shown in FIG. 10, the base station performs uplink-downlink configurations on different frequency resources through higher layer signaling or dynamic signaling. It is assumed that a DL/UL BWP is four RB sets. In a slot 2 to a slot 6, the base station configures a transmission direction of at least one RB set of the RB set 0 to the RB set 3. For example, in the slot 2, the RB set 0, the RB set 2, and the RB set 3 are indicated as DL, and the RB set 1 is indicated as UL. The opposite is true in slot 5, where the RB set 0, the RB set 2, and the RB set 3 are indicated as UL, and the RB set 1 is indicated as DL. This is similar for the remaining slots, and details are not described again.

In another manner, through the signaling, DL/UL/F (namely, any configuration) configured through the semi-persistent TDD-UL-DL-ConfigurationCommon and/or TDD-UL-DL-ConfigDedicated may be updated. In FIG. 8 or FIG. 9 above, the base station can perform uplink-downlink configurations on different frequency resources through higher layer signaling or dynamic signaling. It is assumed that DL/UL/F configured through the semi-persistent TDD-UL-DL-ConfigurationCommon and/or TDD-UL-DL-ConfigDedicated is as shown in FIG. 8. The uplink-downlink configurations of different frequency resources by the base station through higher layer signaling or dynamic signaling (for example, through a frequency domain information FFI configuration) are shown in FIG. 10. In this case, on a terminal side, for an RB set at same time, a transmission direction of a resource configured through the semi-persistent TDD-UL-DL-ConfigurationCommon and/or TDD-UL-DL-ConfigDedicated may be different from a transmission direction of a resource configured through an FFI. For example, a transmission direction of the RB set 1 in the slot 2 is configured as DL (this is because transmission directions of different slots/symbols over the entire BWP are configured in the time domain semi-persistent configuration) through the semi-persistent TDD-UL-DL-ConfigurationCommon and/or TDD-UL-DL-ConfigDedicated, and configured as UL through the FFI. Therefore, in the slot, the UE performs receiving/sending in the direction configured through the FFI. To be specific, the FFI configuration information takes precedence over the semi-persistent TDD-UL-DL-ConfigurationCommon and/or TDD-UL-DL-ConfigDedicated configuration; and/or the FFI configuration information takes precedence over the SFI configuration information.

In some possible embodiments, step 302 may include the following step 302b:
Step 302b: The UE determines, based on the first frequency domain configuration and the first time domain configuration, that a first frequency domain resource of a first time domain resource is available and performs transmission on the first frequency domain resource, in a case that a transmission format of the first time domain resource matches a transmission format of the first frequency domain resource.

The first time domain resource is one of the M time domain resources; and the first frequency domain resource is at least one of the N frequency domain resources.

It should be noted that "transmission" described in embodiments of this application includes sending and/or receiving.

In some possible embodiments, the transmission determining method provided in this embodiment of this application may include the following step 303:
Step 303: Receive an SPS PDSCH on a first target resource if the SPS PDSCH is configured on the first target resource; or skip receiving the SPS PDSCH on a second target resource if the SPS PDSCH is configured on the second target resource.

The first target resource is a second frequency domain resource of a second time domain resource;
the second target resource is a third frequency domain resource of the second time domain resource;
the second frequency domain resource is a frequency domain resource whose transmission format is downlink or flexible among the N frequency domain resources;
the second time domain resource is a time domain resource whose transmission format is downlink or flexible among the M time domain resources; and
the third frequency domain resource is a frequency domain resource whose transmission format is uplink or flexible among the N frequency domain resources.

Optionally, in this embodiment of this application, step 302 may include the following step 302c:
Step 302c: The UE performs, based on the target configuration, the target operation in a case that at least some resources of an SPS PDSCH overlap the first resource.

The target configuration indicates that the first resource meets:
the time domain transmission direction of the first resource is configured as a semi-persistent downlink resource and/or a semi-persistent flexible resource, and
the frequency domain transmission direction of the first resource is configured as uplink and/or flexible, or frequency domain transmission directions of some resources in the first resource are configured as uplink and/or flexible.

In some possible embodiments, the SPS PDSCH includes at least one SPS PDSCH; and the target operation includes at least one of: a first operation (which may be referred to as an operation 1), a second operation (which may be referred to as an operation 2), a third operation (which may be referred to as an operation 3), or a fourth operation (which may be referred to as an operation 4).

The first operation is a conflict resolving operation between the at least one SPS PDSCH;
the second operation is a resource conflict resolving operation between a third SPS PDSCH and a dynamically scheduled DG PDSCH;
the third operation is a resource conflict resolving operation between the third SPS PDSCH and the first resource in time domain;
the fourth operation is a resource conflict resolving operation between the third SPS PDSCH and the first resource in frequency domain; and
the third SPS PDSCH is one of the at least one SPS PDSCH.

The four operations (namely, the first operation to the fourth operation) are further described below:
(1) The first operation is the conflict resolving operation between the at least one SPS PDSCH.

For the first operation, it is assumed that a number of received SPS PDSCHs configured and activated by the UE exceeds one in a slot of a serving cell. The UE cannot receive SPS PDSCHs with overlapping time domain resources, and a number of PDSCHs that the UE can receive in one slot is limited by capabilities of the UE (where for example, a maximum number of PDSCHs that the UE can receive in one slot is 1, 2, 4, or 7). In this case, the UE needs to resolve a conflict between the SPS PDSCHs in the slot in a specific manner.

In an example, it is assumed that all SPS PDSCHs configured and activated in the foregoing slot are a set Q. The UE selects an SPS PDSCH with a smallest SPS configuration index in the slot as a surviving SPS PDSCH, and deletes the surviving SPS PDSCH and all other SPS PDSCHs that overlap the surviving SPS PDSCH in time domain from the set Q. Q is then updated and the foregoing operations are repeated until Q is an empty set or a number of surviving SPS PDSCHs is equal to the maximum number of PDSCHs that the UE can receive in one slot. It should be noted that the UE only receives the surviving SPS PDSCHs and performs HARQ-ACK feedback for the surviving SPS PDSCHs. The UE does not need to receive other SPS PDSCHs, and does not need to feedback HARQ-ACK of the SPS PDSCHs. For details, refer to FIG. 11 below.

(2) The second operation is the resource conflict resolving operation between the third SPS PDSCH and the dynamically scheduled DG PDSCH.

For the second operation, after the base station configures and activates one SPS PDSCH, at a sending position of the SPS PDSCH, the base station may schedule a DG PDSCH to overlap the SPS PDSCH in time domain. The UE cannot receive two PDSCHs with overlapping time domain resources. In this case, the UE can only receive the DG PDSCH, and does not need to receive the SPS PDSCH. In addition, because processing by the UE takes time, a PDCCH scheduling the DG PDSCH needs to arrive some time before a starting symbol of the SPS PDSCH to ensure that the UE has enough time for processing. For details, refer to FIG. 13 below.

(3) The third operation is the resource conflict resolving operation between the third SPS PDSCH and the first resource in time domain.

For the third operation, after the base station configures and activates an SPS PDSCH, the SPS PDSCH is sent periodically. In a specific period, time domain symbols (some or all symbols) of the SPS PDSCH may be configured with time domain semi-persistent signaling such as TDD-UL-DL-ConfigurationCommon and/or TDD-UL-DL-ConfigDedicated as UL symbols. In this case, the base station cannot send the SPS PDSCH. Therefore, the UE does not receive the SPS PDSCH, and does not need to feed back HARQ-ACK of the SPS PDSCH.

(4) The fourth operation is the resource conflict resolving operation between the third SPS PDSCH and the first resource in frequency domain.

For the fourth operation, after the base station configures and activates an SPS PDSCH, the SPS PDSCH is sent periodically. In a specific period, (some or all) frequency domain resources of symbols of the SPS PDSCH may be configured as UL with frequency domain resource configuration signaling. In this case, the base station cannot send the SPS PDSCH. Therefore, the UE does not receive the SPS PDSCH, and does not need to feed back HARQ-ACK of the SPS PDSCH.

In some possible embodiments, that "the UE performs the target operation" in the foregoing step 302c includes the following step 302c1:
Step 302c1: The UE performs the target operation in a first execution sequence.

The first execution sequence includes at least one of the following:
sequentially performing a third operation, a fourth operation, and a first operation;
sequentially performing the fourth operation, the third operation, and the first operation; or
sequentially performing the fourth operation and the first operation.

For example, the UE performs the target operation in the first execution sequence when receiving only the SPS PDSCH.

In some possible embodiments, that "the UE performs the target operation" in the foregoing step 302c includes the following step 302c2:

Step 302c2: The UE performs the target operation in a second execution sequence if at least one SPS PDSCH and a dynamically scheduled DG PDSCH have overlapping time domain resources.

The second execution sequence includes at least one of the following:
sequentially performing a fourth operation, a third operation, a second operation, and a first operation;
sequentially performing the third operation, the fourth operation, the second operation, and the first operation;
sequentially performing the fourth operation, the second operation, the third operation, and the first operation;
sequentially performing the third operation, the second operation, the fourth operation, and the first operation;
sequentially performing the second operation, the third operation, the fourth operation, and the first operation; or
sequentially performing the second operation, the fourth operation, the third operation, and the first operation.

In some possible embodiments, for uplink configuration transmission (for example, CG PUSCH, HARQ-ACK for SPS HARQ-ACK, and CSI/SR), if a resource of the uplink configuration transmission overlaps a DL resource (namely, the foregoing first resource) configured through frequency domain uplink-downlink configuration information, the UE may perform processing in any one of the following manners:

Manner 1: The UE first performs a conflict resolving operation between the uplink configuration transmission and the DL resource configured through the frequency domain uplink-downlink configuration information, and then performs an intra-UE prioritization/multiplexing conflict resolving operation (namely, a multiplexing or discarding operation performed when overlapping with another channel occurs). Further, the frequency domain uplink-downlink configuration information is higher layer signaling.

Manner 2: The UE first performs the intra-UE prioritization/multiplexing conflict resolving operation, and then performs the conflict resolving operation between the uplink configuration transmission and the DL resource configured through the frequency domain uplink-downlink configuration information. Further, the frequency domain uplink-downlink configuration information is dynamic signaling.

For example, in current technologies, the configuration of the SPS PDSCH is periodic. For example, the base station configures a period and an offset within the period, and activates DCI to indicate a symbol in the slot. In this way, for one SPS PDSCH, the UE can determine a time frequency domain position within each period (where a frequency domain position is unchanged). Due to the periodic configuration, conflicts with a transmission direction may occur. When a time domain resource of the SPS PDSCH overlaps a semi-persistently configured UL resource, the base station cannot send the SPS PDSCH, and the UE does not need to receive the SPS PDSCH. Therefore, the following case may occur:

In a specific slot, the SPS PDSCH is located on a DL resource and/or an F resource configured through TDD-UL-DL-ConfigurationCommon and/or TDD-UL-DL-ConfigDedicated. However, some/all DL frequency domain resources and/or F frequency domain resources configured through the TDD-UL-DL-ConfigurationCommon, and/or the TDD-UL-DL-ConfigDedicated are updated to UL (possibly some resources in frequency domain). In this case, when the SPS PDSCH overlaps the resources updated to UL (where both time domain resources and frequency domain resources overlap, or only time domain resources overlap), the base station cannot send the SPS PDSCH to the UE on the resources. Therefore, the UE does not need to receive the SPS PDSCH.

It should be noted that the conflict (namely, the foregoing resource overlap) may be determined first based on the SFI and then based on the FFI.

In addition, considering that the UE needs to receive a plurality of SPS PDSCHs within one slot in one serving cell, the UE may determine, in the following manners, which SPS PDSCHs to receive.

Manner 1: The UE first determines, according to an uplink-downlink configuration, which SPS PDSCHs to receive. For example, when a DL resource or an F resource configured through the TDD-UL-DL-ConfigurationCommon, and/or the TDD-UL-DL-ConfigDedicated is updated to UL, and the SPS PDSCH overlaps the UL resource, the UE does not receive the SPS PDSCH (namely, the operation 4). The UE then determines which SPS PDSCHs to receive among other activated SPS PDSCHs in the slot according to an index configured for the SPS PDSCH (namely, the operation 1).

In an example, the foregoing signaling for updating update (or configuring) some of or all the DL resources or the F resources configured through the TDD-UL-DL-ConfigurationCommon and/or the TDD-UL-DL-ConfigDedicated is semi-persistent signaling such as a SIB or RRC or a MAC CE.

Manner 2: The UE then determines which SPS PDSCHs to receive among other activated SPS PDSCHs in the slot according to an index configured for the SPS PDSCH (namely, the operation 1). In the SPS PDSCH determined to be received, if the SPS PDSCH overlaps the UL resource (where for example, the DL resource or the F resource configured through the TDD-UL-DL-ConfigurationCommon and/or the TDD-UL-DL-ConfigDedicated configuration is updated to UL) (namely, the operation 4), the UE does not receive the SPS PDSCH. In addition, the UE does not feed back HARQ-ACK of the SPS PDSCH.

In an example, the foregoing signaling for updating update (or configuring) the DL resource or the F resource configured through the TDD-UL-DL-ConfigurationCommon and/or the TDD-UL-DL-ConfigDedicated is dynamic signaling, for example, DCI.

For example, as shown in FIG. 11, a configuration of a slot 3 is shown in FIG. 10. To be specific, the slot 3 is configured as a DL slot through the TDD-UL-DL-ConfigurationCommon and/or the TDD-UL-DL-ConfigDedicated. An RB set 0 and an RB set 1 are configured as UL through a frequency domain uplink-downlink configuration, and an SPS PDSCH 0 to an SPS PDSCH 2 represent SPS PDSCHs activated by the UE on the serving cell and received in the slot. Assuming that a maximum number of decoded PDSCHs received by the UE in one slot is two, according to current technologies, the UE selects, according to SPS PDSCH configuration indexes, up to two non-overlapping SPS PDSCHs for reception and HARQ-ACK feedback. In other words, the UE selects the SPS PDSCH 0 and the SPS PDSCH 2.

However, considering that the SPS PDSCH 0 overlaps the UL resource, the base station may not be able to send the SPS PDSCH 0 on the resource. Therefore, the UE may first exclude the SPS PDSCH and not receive the SPS PDSCH 0 in the foregoing manner 1. In the remaining SPS PDSCH 1 and SPS PDSCH 2, which SPS PDSCH or SPS PDSCHs are received is determined based on current technologies. The UE determines to receive the SPS PDSCH 1 and the SPS PDSCH 2 and performs HARQ-ACK feedback for the SPS PDSCH 1 and the SPS PDSCH 2.

For example, as shown in FIG. 12, FIG. 12 shows another time frequency domain resource configuration. A slot n is configured as a downlink slot through time domain semi-persistent signaling. Symbols 8 to 13 in the slot n are configured as UL symbols due to a Full duplex/flexible configuration. An SPS PDSCH 0 to an SPS PDSCH 2 represent SPS PDSCHs configured and activated by the UE on the serving cell and received in the slot. Assuming that a maximum number of decoded PDSCHs received by the UE in one slot is two, according to current technologies, the UE selects, according to SPS PDSCH configuration indexes, up to two non-overlapping SPS PDSCHs for reception and HARQ-ACK feedback. In other words, the UE selects the SPS PDSCH 0 and the SPS PDSCH 2. Considering that the SPS PDSCH 1 and the SPS PDSCH 2 conflict with the UL resource, the base station cannot send the SPS PDSCH 1 and the SPS PDSCH 2 at this position. When determining to receive an SPS PDSCH, the UE should first exclude the SPS PDSCH 1 and the SPS PDSCH 2 and not receive the SPS PDSCH 1 and the SPS PDSCH 2. In the remaining SPS PDSCH 0, which SPS PDSCH or SPS PDSCHs are received is determined according to current technologies. The UE determines to receive the SPS PDSCH 0 and performs HARQ-ACK feedback for the SPS PDSCH 0.

For example, as shown in FIG. 13, FIG. 13 shows a scenario in which a DG PDSCH overrides (overrides) an SPS PDSCH. In current technologies, when the DG PDSCH scheduled by the base station and the SPS PDSCH have overlapping time domain resources, the UE can only receive the DG PDSCH. In addition, a time interval between an end position of PDCCH transmission of the DG PDSCH and a start position of the SPS PDSCH needs to meet specific requirements. Otherwise, it is erroneous scheduling.

As shown in FIG. 13, an RB set 0 to an RB set 2 of symbols 8 to 13 in a DL slot n are configured as UL. In this case, the UE may first resolve a conflict between the SPS PDSCH 0 and the UL resource, and then resolve the problem of overlapping between the DG PDSCH and the SPS PDSCH, namely, the problem of overlapping between the SPS PDSCH 0 and the UL resource. The UE does not receive the SPS PDSCH 0 and does not feed back HARQ-ACK of the SPS PDSCH 0. It is determined that the SPS PDSCH is not received. Therefore, during scheduling of the DG PDSCH by the base station, the problem of overlapping between the DG PDSCH and the SPS PDSCH 0 does not exist, and a time requirement for the DG PDSCH to override the SPS PDSCH does not need to be met.

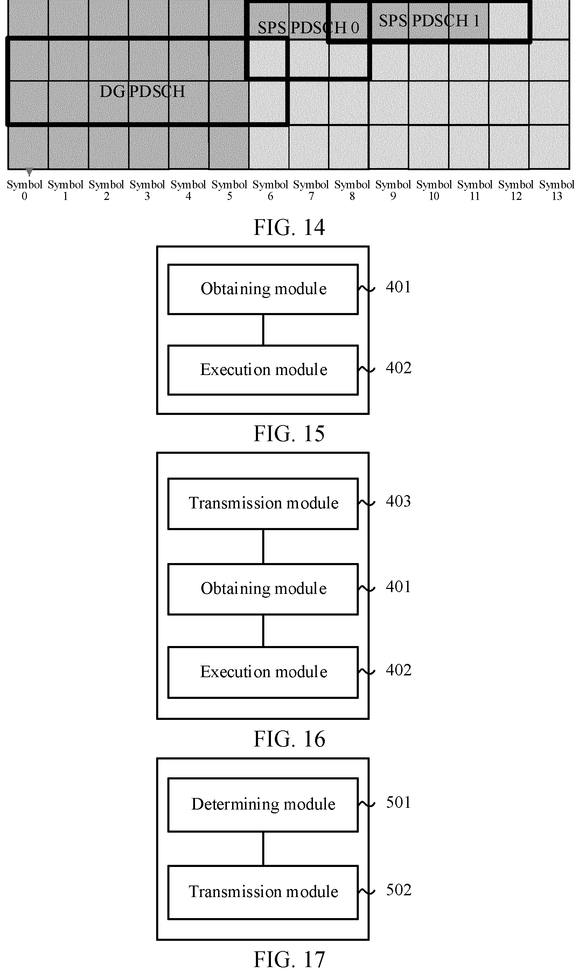

For example, as shown in FIG. 14, based on a time domain semi-persistent configuration, symbols 0 to 5 in a slot n are configured as DL, symbols 6 to 11 in the slot n are configured as F, and symbols 12 and 13 in the slot n are configured as UL. Based on a frequency domain resource configuration signaling FFI, an RB set 0 to an RB set 2 of the symbols slot 6 to slot 11 are configured as UL, an RB set 3 of the symbols 6 to 11 is configured as DL, and all RB sets of the symbol 12 or 13 are configured as UL.

With reference to FIG. 14, for a PDSCH, the UE may sequentially perform the following operations:
a third operation, where if the SPS PDSCH 1 overlaps a UL symbol with a time domain configuration, the UE does not receive the SPS PDSCH 1;
a fourth operation, where if the SPS PDSCH 0 overlaps a UL resource with a frequency domain configuration, the UE does not receive the SPS PDSCH 0;
a first operation, where because neither the SPS PDSCH 0 nor the SPS PDSCH 1 is received, the UE does not need to perform this step; and
a second operation, where the DG PDSCH overlaps the SPS PDSCH 0. Because it is determined based on the semi-persistent signaling that the SPS PDSCH 0 is not received, there is no scenario in which the DG PDSCH overrides the SPS PDSCH in this case, and a time requirement for the DG PDSCH to override the SPS PDSCH does not need to be met during scheduling of the DG PDSCH.

In this way, when the SPS PDSCH overlaps the first resource, the UE can not only determine which SPS PDSCHs to receive or not receive, but also define the sequence of resolving the conflict between the SPS PDSCHs and the conflict between the SPS PDSCH and the DG PDSCH, thereby improving effectiveness of the communication system.

The transmission determining method according to embodiments of this application may be performed by a transmission determining apparatus. In this embodiment of this application, the transmission determining apparatus provided in embodiments of this application is described by taking the transmission determining method performed by the transmission determining apparatus as an example.

An embodiment of this application provides a transmission determining apparatus. As shown in FIG. 15, the apparatus includes an obtaining module 401 and an execution module 402, where
the obtaining module 401 is configured to obtain a target configuration; and
the execution module 402 is configured to perform a target operation based on the target configuration obtained by the obtaining module 401, where
the target configuration is used for configuring a frequency domain transmission direction and a time domain transmission direction of a first resource.

In some possible embodiments, the target configuration includes a first frequency domain configuration and a first time domain configuration; and the frequency domain transmission direction of the first resource configured in the first frequency domain configuration is different from the time domain transmission direction of the first resource configured in the first time domain configuration.

In some possible embodiments, the first resource includes N frequency domain resources and M time domain resources;
the first frequency domain configuration indicates transmission formats of the N frequency domain resources, where N is a positive integer;
the first time domain configuration indicates transmission formats of the M time domain resources, where M is a positive integer;
the N frequency domain resources are located on the M time domain resources; and
the transmission format indicates a transmission direction.

In some possible embodiments, as shown in FIG. 16, the apparatus further includes a transmission module 403, where the transmission module 403 is configured to perform transmission on the first resource based on the first frequency domain configuration.

In some possible embodiments, the transmission module 403 is further configured to determine, based on the first frequency domain configuration and the first time domain configuration, that a first frequency domain resource of a first time domain resource is available and perform transmission on the first frequency domain resource, in a case that a transmission format of the first time domain resource matches a transmission format of the first frequency domain resource, where
the first time domain resource is one of the M time domain resources; and
the first frequency domain resource is at least one of the N frequency domain resources.

In some possible embodiments, the transmission module 403 is further configured to receive an SPS PDSCH on a first target resource if the SPS PDSCH is configured on the first target resource; or skip receiving the SPS PDSCH on a second target resource if the SPS PDSCH is configured on the second target resource, where
the first target resource is a second frequency domain resource of a second time domain resource;
the second target resource is a third frequency domain resource of the second time domain resource;
the second frequency domain resource is a frequency domain resource whose transmission format is downlink or flexible among the N frequency domain resources;
the second time domain resource is a time domain resource whose transmission format is downlink or flexible among the M time domain resources; and
the third frequency domain resource is a frequency domain resource whose transmission format is uplink or flexible among the N frequency domain resources.

In some possible embodiments, the execution module 402 is further configured to perform, based on the target configuration, the target operation in a case that at least some resources of an SPS PDSCH overlap the first resource, where
the target configuration indicates that the first resource meets:
the time domain transmission direction of the first resource is configured as a semi-persistent downlink resource and/or a semi-persistent flexible resource, and
the frequency domain transmission direction of the first resource is configured as uplink and/or flexible, or frequency domain transmission directions of some resources in the first resource are configured as uplink and/or flexible.

In some possible embodiments, the SPS PDSCH includes at least one SPS PDSCH; and
the target operation includes at least one of the following:
a first operation, a second operation, a third operation, or a fourth operation, where
the first operation is a conflict resolving operation between the at least one SPS PDSCH;
the second operation is a resource conflict resolving operation between a third SPS PDSCH and a dynamically scheduled DG PDSCH;
the third operation is a resource conflict resolving operation between the third SPS PDSCH and the first resource in time domain;
the fourth operation is a resource conflict resolving operation between the third SPS PDSCH and the first resource in frequency domain; and
the third SPS PDSCH is one of the at least one SPS PDSCH.

In some possible embodiments, the execution module 402 is further configured to:
perform the target operation in a first execution sequence, where
the first execution sequence includes at least one of the following:
sequentially performing a third operation, a fourth operation, and a first operation;
sequentially performing the fourth operation, the third operation, and the first operation; or
sequentially performing the fourth operation and the first operation.

In some possible embodiments, the execution module 402 is further configured to:
perform the target operation in a second execution sequence if at least one SPS PDSCH and a dynamically scheduled DG PDSCH have overlapping time domain resources, where
the second execution sequence includes at least one of the following:
sequentially performing a fourth operation, a third operation, a second operation, and a first operation;
sequentially performing the third operation, the fourth operation, the second operation, and the first operation;
sequentially performing the fourth operation, the second operation, the third operation, and the first operation;
sequentially performing the third operation, the second operation, the fourth operation, and the first operation;
sequentially performing the second operation, the third operation, the fourth operation, and the first operation; or
sequentially performing the second operation, the fourth operation, the third operation, and the first operation.

In the transmission determining apparatus according to this embodiment of this application, after the target configuration for configuring the frequency domain transmission direction and the time domain transmission direction of the first resource is obtained, the target operation can be performed based on the target configuration, thereby improving effectiveness of a communication system.

An embodiment of this application further provides a transmission determining apparatus. As shown in FIG. 17, the apparatus includes a determining module 501 and a transmission module 502, where
the determining module 501 is configured to determine a first frequency domain configuration according to a target configuration rule; and
the transmission module 502 is configured to send the first frequency domain configuration determined by the determining module 501 to UE, where
the target configuration rule includes: only a flexible time domain resource with a time domain semi-persistent configuration is allowed to be updated, and a transmission direction of a downlink time domain resource or an uplink time domain resource with the time domain semi-persistent configuration cannot be updated.

In some possible embodiments, a time domain resource with the time domain semi-persistent configuration includes a time domain resource configured through at least one of the following:
a time domain semi-persistent TDD uplink-downlink configuration;
a semi-persistent downlink transmission configuration configured through higher layer or RRC signaling;
a semi-persistent uplink transmission configuration configured through higher layer or RRC signaling;
an SSB configured through higher layer signaling; or
a control resource set configured by a SIB in a MIB and used for a TypeO-PDCCH CSS.

In the transmission determining apparatus according to this embodiment of this application, the apparatus determines the first frequency domain configuration according to the target configuration rule, and then sends the first frequency domain configuration to the UE. Only a network side is allowed to update a flexible time domain resource with the time domain semi-persistent configuration, and a transmission direction of a downlink time domain resource or an uplink time domain resource with the time domain semi-persistent configuration cannot be updated, thereby improving effectiveness of a communication system.

The transmission determining apparatus in this embodiment of this application may be an electronic device, such as an electronic device with an operating system, or a component in an electronic device, such as an integrated circuit or a chip. The electronic device may be a terminal or another device other than a terminal. For example, the terminal may include, but is not limited to, the types of the terminal 11 listed above, and the another device may be a server, a network attached storage (Network Attached Storage, NAS), or the like. This is not specifically limited in this embodiment of this application.

The transmission determining apparatus according to this embodiment of this application can implement the processes implemented in the foregoing method embodiments, and achieve the same technical effects. To avoid repetition, details are not described herein again.

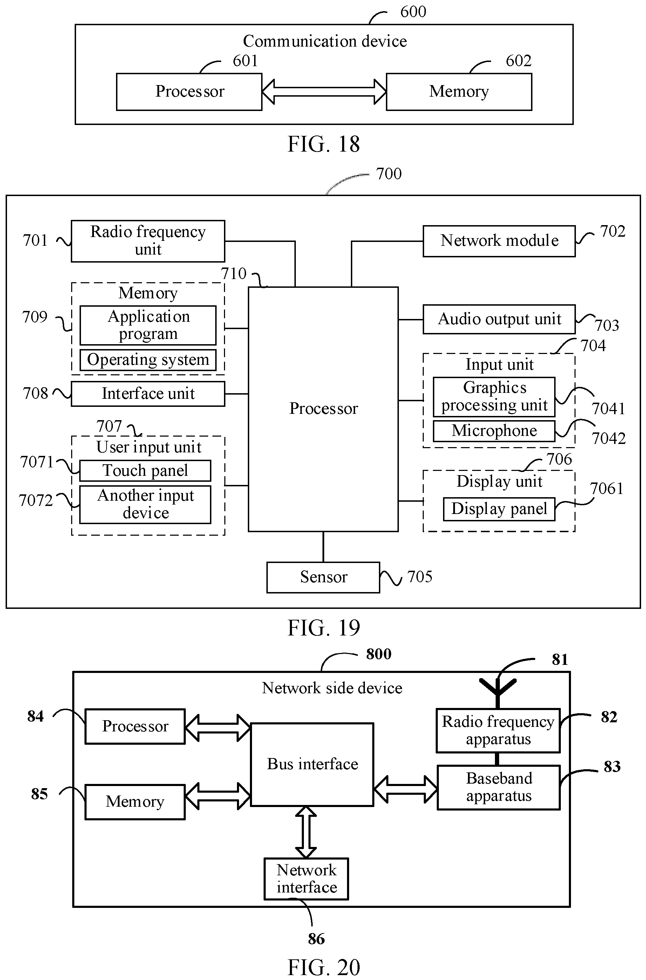

Optionally, as shown in FIG. 18, an embodiment of this application further provides a communication device 600, including a processor 601 and a memory 602. The memory 602 stores a program or instructions executable on the processor 601. For example, when the communication device 600 is a terminal, the program or the instructions, when executed by the processor 601, implement the steps of the method embodiments of the foregoing transmission determining method, and can achieve the same technical effects. When the communication device 600 is a network side device, the program or the instructions, when executed by the processor 601, implement the steps of the method embodiments of the transmission determining method, and can achieve the same technical effects. To avoid repetition, details are not described herein again.

An embodiment of this application further provides UE, including a processor and a communication interface. The processor is configured to obtain a target configuration, and perform a target operation based on the target configuration, where the target configuration is used for configuring a frequency domain transmission direction and a time domain transmission direction of a first resource. The UE embodiment corresponds to the foregoing UE-side method embodiment. Each implementation process and implementation of the foregoing method embodiment can be applied to the UE embodiment, and can achieve the same technical effects. Specifically, FIG. 19 is a schematic diagram of a hardware structure of UE that implements an embodiment of this application.

The UE 700 includes, but is not limited to, at least some of components including a radio frequency unit 701, a network module 702, an audio output unit 703, an input unit 704, a sensor 705, a display unit 706, a user input unit 707, an interface unit 708, a memory 709, a processor 710, and the like.

A person skilled in the art may understand that the UE 700 may further include the power supply (for example, a battery) for supplying power to the components. The power supply may be logically connected to the processor 710 through a power management system, thereby implementing functions such as charging, discharging, and power consumption management through the power management system. The UE structure shown in FIG. 19 does not constitute a limitation to the UE, and the UE may include more or fewer components than those shown in the figure, or some components may be combined, or a different component deployment may be used. Details are not described herein again.

It should be understood that in embodiments of this application, the input unit 704 may include a graphics processing unit (Graphics Processing Unit, GPU) 7041 and a microphone 7042, and the graphics processing unit 7041 processes image data of still images or videos obtained by an image capture apparatus (for example, a camera) in a video capture mode or an image capture mode. The display unit 706 may include a display panel 7061, and the display panel 7061 may be configured in a form such as a liquid crystal display or an organic light-emitting diode. The user input unit 707 includes at least one of a touch panel 7071 and another input device 7072. The touch panel 7071 is also referred to as a touchscreen. The touch panel 7071 may include two parts: a touch detection apparatus and a touch controller. The another input device 7072 may include, but is not limited to, a physical keyboard, a functional key (for example, a volume control key or a switch key), a track ball, a mouse, and a joystick, which are not repeated herein.

In this embodiment of this application, the radio frequency unit 701 receives downlink data from a network side device and then transmits the data to the processor 710 for processing. In addition, the radio frequency unit 701 may send uplink data to the network side device. Generally, the radio frequency unit 701 includes, but is not limited to, an antenna, an amplifier, a transceiver, a coupler, a low noise amplifier, a duplexer, and the like.

The memory 709 may be configured to store software programs or instructions, and various pieces of data. The memory 709 may mainly include a first storage area storing a program or instructions and a second storage area storing data. The first storage area may store an operating system, an application program or instruction required by at least one function (for example, a sound playing function and an image playing function), and the like. In addition, the memory 709 may include a volatile memory or a non-volatile memory, or the memory 709 may include both a volatile and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), a static random access memory (static RAM, SRAM), a dynamic random access memory (dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synch link DRAM, SLDRAM), and a direct rambus random access memory (Direct Rambus RAM, DR RAM). The memory 709 in this embodiment of this application includes, but is not limited to, such memories and any other suitable types of memories.

The processor 710 may include one or more processing units. Optionally, the processor 710 integrates an application processor and a modem processor. The application processor mainly processes operations related to an operating system, a user interface, an application program, and the like. The modem processor mainly processes wireless communication signals, and may be, for example, a baseband processor. It may be understood that the foregoing modem processor may either not be integrated into the processor 710.

The processor 710 is configured to obtain a target configuration, and is further configured to perform a target operation based on the target configuration, where the target configuration is used for configuring a frequency domain transmission direction and a time domain transmission direction of a first resource.

In some possible embodiments, the target configuration includes a first frequency domain configuration and a first time domain configuration; and the frequency domain transmission direction of the first resource configured in the first frequency domain configuration is different from the time domain transmission direction of the first resource configured in the first time domain configuration.

In some possible embodiments, the first resource includes N frequency domain resources and M time domain resources;
the first frequency domain configuration indicates transmission formats of the N frequency domain resources, where N is a positive integer;
the first time domain configuration indicates transmission formats of the M time domain resources, where M is a positive integer;
the N frequency domain resources are located on the M time domain resources; and
the transmission format indicates a transmission direction.

In some possible embodiments, the radio frequency unit 701 is configured to perform transmission on the first resource based on the first frequency domain configuration.

In some possible embodiments, the radio frequency unit 701 is further configured to determine, based on the first frequency domain configuration and the first time domain configuration, that a first frequency domain resource of a first time domain resource is available and perform transmission on the first frequency domain resource, in a case that a transmission format of the first time domain resource matches a transmission format of the first frequency domain resource, where
the first time domain resource is one of the M time domain resources; and
the first frequency domain resource is at least one of the N frequency domain resources.

In some possible embodiments, the radio frequency unit 701 is further configured to receive an SPS PDSCH on a first target resource if the SPS PDSCH is configured on the first target resource; or skip receiving the SPS PDSCH on a second target resource if the SPS PDSCH is configured on the second target resource, where
the first target resource is a second frequency domain resource of a second time domain resource;
the second target resource is a third frequency domain resource of the second time domain resource;
the second frequency domain resource is a frequency domain resource whose transmission format is downlink or flexible among the N frequency domain resources;
the second time domain resource is a time domain resource whose transmission format is downlink or flexible among the M time domain resources; and
the third frequency domain resource is a frequency domain resource whose transmission format is uplink or flexible among the N frequency domain resources.

In some possible embodiments, the processor 710 is further configured to perform, based on the target configuration, the target operation in a case that at least some resources of an SPS PDSCH overlap the first resource, where
the target configuration indicates that the first resource meets:
the time domain transmission direction of the first resource is configured as a semi-persistent downlink resource and/or a semi-persistent flexible resource, and
the frequency domain transmission direction of the first resource is configured as uplink and/or flexible, or frequency domain transmission directions of some resources in the first resource are configured as uplink and/or flexible.

In some possible embodiments, the SPS PDSCH includes at least one SPS PDSCH; and
the target operation includes at least one of the following:
a first operation, a second operation, a third operation, or a fourth operation, where
the first operation is a conflict resolving operation between the at least one SPS PDSCH;
the second operation is a resource conflict resolving operation between a third SPS PDSCH and a dynamically scheduled DG PDSCH;
the third operation is a resource conflict resolving operation between the third SPS PDSCH and the first resource in time domain;
the fourth operation is a resource conflict resolving operation between the third SPS PDSCH and the first resource in frequency domain; and
the third SPS PDSCH is one of the at least one SPS PDSCH.

In some possible embodiments, the processor 710 is further configured to:
perform the target operation in a first execution sequence, where
the first execution sequence includes at least one of the following:
   sequentially performing a third operation, a fourth operation, and a first operation;
   sequentially performing the fourth operation, the third operation, and the first operation; or
   sequentially performing the fourth operation and the first operation.

In some possible embodiments, the execution module 402 is further configured to:
perform the target operation in a second execution sequence if at least one SPS PDSCH and a dynamically scheduled DG PDSCH have overlapping time domain resources, where
the second execution sequence includes at least one of the following:
   sequentially performing a fourth operation, a third operation, a second operation, and a first operation;
   sequentially performing the third operation, the fourth operation, the second operation, and the first operation;
   sequentially performing the fourth operation, the second operation, the third operation, and the first operation;
   sequentially performing the third operation, the second operation, the fourth operation, and the first operation;
   sequentially performing the second operation, the third operation, the fourth operation, and the first operation; or
   sequentially performing the second operation, the fourth operation, the third operation, and the first operation.

In the UE according to this embodiment of this application, after the target configuration for configuring the frequency domain transmission direction and the time domain transmission direction of the first resource is obtained, the target operation can be performed based on the target configuration, thereby improving effectiveness of a communication system.

An embodiment of this application further provides a network side device, including a processor and a communication interface. The processor is configured to determine a first frequency domain configuration according to a target configuration rule. The communication interface is configured to send the first frequency domain configuration to UE, where the target configuration rule includes: only a flexible time domain resource with a time domain semi-persistent configuration is allowed to be updated, and a transmission direction of a downlink time domain resource or an uplink time domain resource with the time domain semi-persistent configuration cannot be updated. This network side device embodiment corresponds to the foregoing network side device method embodiment. Each implementation process and implementation of the foregoing method embodiment can be applied to this network side device embodiment, and can achieve the same technical effects.

Specifically, an embodiment of this application further provides a network side device. As shown in FIG. 20, the network side device 800 includes: an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes information to be sent, and sends the information to the radio frequency apparatus 82. The radio frequency apparatus 82 processes the received information and sends the information through the antenna 81.

The method performed by the network side device in the foregoing embodiment may be implemented in the baseband apparatus 83, where the baseband apparatus 83 includes a baseband processor.

The baseband apparatus 83 may include, for example, at least one baseband plate. A plurality of chips are disposed on the baseband plate. As shown in FIG. 20, one of the chips is, for example, the baseband processor, and is connected to the memory 85 by a bus interface, to invoke a program in the memory 85 to perform operations of the network device in the foregoing method embodiment.

The network side device may further include a network interface 86, where the interface is, for example, a common public radio interface (common public radio interface, CPRI).

Specifically, the network side device 800 in this embodiment of the present invention further includes: instructions or a program stored in the memory 85 and executable on the processor 84. The processor 84 invokes the instructions or the program in the memory 85 to perform the method executed by each module shown in FIG. 17, and achieve the same technical effects. To avoid repetition, details are not repeated herein.

An embodiment of this application further provides a readable storage medium. The readable storage medium stores a program or instructions, where the program or the instructions, when executed by a processor, implement the processes of the method embodiments of the foregoing transmission determining method, and achieve the same technical effects. To avoid repetition, details are not described herein again.

The processor is the processor in the terminal described in the foregoing embodiment. The readable storage medium includes a computer-readable storage medium such as a computer read only memory ROM, a random access memory RAM, a magnetic disk, or an optical disk.

An embodiment of this application further provides a chip, where the chip includes a processor and a communication interface, the communication interface is coupled to the processor, and the processor is configured to run a program or instructions, to implement the processes of the method embodiments of the foregoing transmission determining method, and achieve the same technical effects. To avoid repetition, details are not described herein again.

It should be understood that, the chip described in this embodiment of this application may also be referred to as a system-level chip, a system chip, a chip system, a system on chip, or the like.

An embodiment of this application further provides a computer program/program product, stored in a storage medium, where the computer program/program product is executed by at least one processor to implement the processes of the method embodiments of the foregoing transmission determining method, and can achieve the same technical effects. To avoid repetition, details are not described herein again.

An embodiment of this application further provides a communication system, including: a terminal and a network side device. The terminal may be configured to perform the steps performed by the UE in the foregoing transmission determining method. The network side device may be configured to perform the steps of the method performed by the network side device in the foregoing transmission determining method.

It should be noted that the term " include", "comprise" or any other variation thereof in this specification is intended to cover a non-exclusive inclusion, which specifies the presence of stated processes, methods, objects, or apparatuses, but does not preclude the presence or addition of one or more other processes, methods, objects, or apparatuses. Without more limitations, elements defined by the sentence "including one" does not exclude that there are still other same elements in the processes, methods, objects, or apparatuses. Further, it should be noted that the scope of the method and the apparatus in the implementations of this application is not limited to performing the functions in the order shown or discussed, but may further include performing the functions in a substantially simultaneous manner or in the reverse order depending on the functions involved. For example, the described method may be performed in an order different from that described, and various steps may be further added, omitted, or combined. In addition, features described with reference to some examples may be combined in other examples.

Through the descriptions of the foregoing implementations, a person skilled in the art may clearly understand that the methods in the foregoing embodiments may be implemented via software and a necessary general hardware platform, and certainly, may also be implemented by hardware, but in many cases, the former manner is a better implementation. Based on such an understanding, the technical solutions of this application essentially or the part contributing to the prior art may be implemented in a form of a computer software product. The computer software product is stored in a storage medium (for example, a ROM/RAM, a magnetic disk, or an optical disc) and includes several instructions for instructing a terminal (which may be a mobile phone, a computer, a server, an air conditioner, a network device, or the like) to perform the method described in embodiments of this application.

Embodiments of this application are described above with reference to the accompanying drawings. However, this application is not limited to the foregoing specific implementations. The foregoing specific implementations are illustrative instead of limitative. Enlightened by this application, a person of ordinary skill in the art can make many forms without departing from the idea of this application and the scope of protection of the claims. All of the forms fall within the protection of this application.

## Claims

1. A transmission determining method, comprising:
obtaining, by user equipment UE, a target configuration; and
performing, by the UE, a target operation based on the target configuration, wherein
the target configuration is used for configuring a frequency domain transmission direction and a time domain transmission direction of a first resource.

2. The method according to claim 1, wherein
the target configuration comprises a first frequency domain configuration and a first time domain configuration; and
the frequency domain transmission direction of the first resource configured in the first frequency domain configuration is different from the time domain transmission direction of the first resource configured in the first time domain configuration.

3. The method according to claim 1 or 2, wherein
the first resource comprises N frequency domain resources and M time domain resources; the first frequency domain configuration indicates transmission formats of the N frequency domain resources, wherein N is a positive integer;
the first time domain configuration indicates transmission formats of the M time domain resources, wherein M is a positive integer;
the N frequency domain resources are located on the M time domain resources; and
the transmission format indicates a transmission direction.

4. The method according to claim 2, wherein the performing, by the UE, a target operation based on the target configuration comprises:
performing, by the UE, transmission on the first resource based on the first frequency domain configuration.

5. The method according to claim 3, wherein the performing, by the UE, a target operation based on the target configuration comprises:
determining, by the UE based on the first frequency domain configuration and the first time domain configuration, that a first frequency domain resource of a first time domain resource is available and performing transmission on the first frequency domain resource, in a case that a transmission format of the first time domain resource matches a transmission format of the first frequency domain resource, wherein
the first time domain resource is one of the M time domain resources; and
the first frequency domain resource is at least one of the N frequency domain resources.

6. The method according to claim 4, wherein the method further comprises:
receiving a semi-persistent scheduling physical downlink shared channel SPS PDSCH on a first target resource if the SPS PDSCH is configured on the first target resource;
or
skipping receiving the SPS PDSCH on a second target resource if the SPS PDSCH is configured on the second target resource, wherein
the first target resource is a second frequency domain resource of a second time domain resource;
the second target resource is a third frequency domain resource of the second time domain resource;
the second frequency domain resource is a frequency domain resource whose transmission format is downlink or flexible among the N frequency domain resources;
the second time domain resource is a time domain resource whose transmission format is downlink or flexible among the M time domain resources; and
the third frequency domain resource is a frequency domain resource whose transmission format is uplink or flexible among the N frequency domain resources.

7. The method according to claim 1, wherein
the performing, by the UE, a target operation based on the target configuration comprises:
performing, by the UE based on the target configuration, the target operation in a case that at least some resources of an SPS PDSCH overlap the first resource, wherein
the target configuration indicates that the first resource meets:
the time domain transmission direction of the first resource is configured as a semi-persistent downlink resource and/or a semi-persistent flexible resource, and
the frequency domain transmission direction of the first resource is configured as uplink and/or flexible, or frequency domain transmission directions of some resources in the first resource are configured as uplink and/or flexible.

8. The method according to claim 7, wherein
the SPS PDSCH comprises at least one SPS PDSCH; and
the target operation comprises at least one of the following:
a first operation, a second operation, a third operation, or a fourth operation, wherein
the first operation is a conflict resolving operation between the at least one SPS PDSCH;
the second operation is a resource conflict resolving operation between a third SPS PDSCH and a dynamically scheduled dynamic grant DG PDSCH;
the third operation is a resource conflict resolving operation between the third SPS PDSCH and the first resource in time domain;
the fourth operation is a resource conflict resolving operation between the third SPS PDSCH and the first resource in frequency domain; and
the third SPS PDSCH is one of the at least one SPS PDSCH.

9. The method according to claim 7, wherein the performing, by the UE, the target operation comprises:
performing, by the UE, the target operation in a first execution sequence, wherein
the first execution sequence comprises at least one of the following:
sequentially performing a third operation, a fourth operation, and a first operation;
sequentially performing the fourth operation, the third operation, and the first operation; or
sequentially performing the fourth operation and the first operation.

10. The method according to claim 7, wherein if at least one SPS PDSCH and a dynamically scheduled DG PDSCH have overlapping time domain resources, the performing, by the UE, the target operation comprises:
performing, by the UE, the target operation in a second execution sequence, wherein
the second execution sequence comprises at least one of the following:
sequentially performing a fourth operation, a third operation, a second operation, and a first operation;
sequentially performing the third operation, the fourth operation, the second operation, and the first operation;
sequentially performing the fourth operation, the second operation, the third operation, and the first operation;
sequentially performing the third operation, the second operation, the fourth operation, and the first operation;
sequentially performing the second operation, the third operation, the fourth operation, and the first operation; or
sequentially performing the second operation, the fourth operation, the third operation, and the first operation.

11. A transmission determining method, comprising:
determining, by a network side device, a first frequency domain configuration according to a target configuration rule; and
sending, by the network side device, the first frequency domain configuration to user equipment UE, wherein
the target configuration rule comprises: only a flexible time domain resource with a time domain semi-persistent configuration is allowed to be updated, and a transmission direction of a downlink time domain resource or an uplink time domain resource with the time domain semi-persistent configuration cannot be updated.

12. The method according to claim 11, wherein a time domain resource with the time domain semi-persistent configuration comprises a time domain resource configured through at least one of the following:
a time domain semi-persistent time division duplex TDD uplink-downlink configuration;
a semi-persistent downlink transmission configuration configured through higher layer or radio resource control RRC signaling;
a semi-persistent uplink transmission configuration configured through higher layer or RRC signaling;
a synchronization signal block SSB configured through higher layer signaling; or
a control resource set configured by a system information block SIB in a master information block MIB and used for a TypeO-physical downlink control channel common search space PDCCH CSS.

13. A transmission determining apparatus, comprising:
an obtaining module, configured to obtain a target configuration; and
an execution module, configured to perform a target operation based on the target configuration obtained by the obtaining module, wherein
the target configuration is used for configuring a frequency domain transmission direction and a time domain transmission direction of a first resource.

14. The apparatus according to claim 13, wherein
the target configuration comprises a first frequency domain configuration and a first time domain configuration; and
the frequency domain transmission direction of the first resource configured in the first frequency domain configuration is different from the time domain transmission direction of the first resource configured in the first time domain configuration.

15. The apparatus according to claim 13 or 14, wherein
the first resource comprises N frequency domain resources and M time domain resources;
the first frequency domain configuration indicates transmission formats of the N frequency domain resources, wherein N is a positive integer;
the first time domain configuration indicates transmission formats of the M time domain resources, wherein M is a positive integer;
the N frequency domain resources are located on the M time domain resources; and
the transmission format indicates a transmission direction.

16. The apparatus according to claim 13, wherein the execution module is further configured to:
perform transmission on the first resource based on the first frequency domain configuration.

17. The apparatus according to claim 15, wherein the execution module is further configured to:
determine, based on the first frequency domain configuration and the first time domain configuration, that a first frequency domain resource of a first time domain resource is available and perform transmission on the first frequency domain resource, in a case that a transmission format of the first time domain resource matches a transmission format of the first frequency domain resource, wherein
the first time domain resource is one of the M time domain resources; and
the first frequency domain resource is at least one of the N frequency domain resources.

18. The apparatus according to claim 16, wherein the apparatus further comprises:
a transmission module, configured to
receive a semi-persistent scheduling physical downlink shared channel SPS PDSCH on a first target resource if the SPS PDSCH is configured on the first target resource;
or
skip receiving the SPS PDSCH on a second target resource if the SPS PDSCH is configured on the second target resource, wherein
the first target resource is a second frequency domain resource of a second time domain resource;
the second target resource is a third frequency domain resource of the second time domain resource;
the second frequency domain resource is a frequency domain resource whose transmission format is downlink or flexible among the N frequency domain resources;
the second time domain resource is a time domain resource whose transmission format is downlink or flexible among the M time domain resources; and
the third frequency domain resource is a frequency domain resource whose transmission format is uplink or flexible among the N frequency domain resources.

19. The apparatus according to claim 13, wherein
the execution module is further configured to:
perform, based on the target configuration, the target operation in a case that at least some resources of an SPS PDSCH overlap the first resource, wherein
the target configuration indicates that the first resource meets:
the time domain transmission direction of the first resource is configured as a semi-persistent downlink resource and/or a semi-persistent flexible resource, and
the frequency domain transmission direction of the first resource is configured as uplink and/or flexible, or frequency domain transmission directions of some resources in the first resource are configured as uplink and/or flexible.

20. The apparatus according to claim 19, wherein
the SPS PDSCH comprises at least one SPS PDSCH; and
the target operation comprises at least one of the following:
a first operation, a second operation, a third operation, or a fourth operation, wherein
the first operation is a conflict resolving operation between the at least one SPS PDSCH;
the second operation is a resource conflict resolving operation between a third SPS PDSCH and a dynamically scheduled dynamic grant DG PDSCH;
the third operation is a resource conflict resolving operation between the SPS PDSCH and the first resource in time domain;
the fourth operation is a resource conflict resolving operation between the third SPS PDSCH and the first resource in frequency domain, or a resource conflict resolving operation between the at least one SPS PDSCH and the first resource in frequency domain; and
the third SPS PDSCH is one of the at least one SPS PDSCH.

21. The apparatus according to claim 19, wherein the execution module is further configured to:
perform the target operation in a first execution sequence, wherein
the first execution sequence comprises at least one of the following:
sequentially performing a third operation, a fourth operation, and a first operation;
sequentially performing the fourth operation, the third operation, and the first operation; or
sequentially performing the fourth operation and the first operation.

22. The apparatus according to claim 19, wherein the execution module is further configured to:
perform the target operation in a second execution sequence if at least one SPS PDSCH and a dynamically scheduled DG PDSCH have overlapping time domain resources, wherein
the second execution sequence comprises at least one of the following:
sequentially performing a fourth operation, a third operation, a second operation, and a first operation;
sequentially performing the third operation, the fourth operation, the second operation, and the first operation;
sequentially performing the fourth operation, the second operation, the third operation, and the first operation;
sequentially performing the third operation, the second operation, the fourth operation, and the first operation;
sequentially performing the second operation, the third operation, the fourth operation, and the first operation; or
sequentially performing the second operation, the fourth operation, the third operation, and the first operation.

23. A transmission determining apparatus, comprising:
a determining module, configured to determine a first frequency domain configuration according to a target configuration rule; and
a transmission module, configured to send the first frequency domain configuration determined by the determining module to UE, wherein
the target configuration rule comprises: only a flexible time domain resource with a time domain semi-persistent configuration is allowed to be updated, and a transmission direction of a downlink time domain resource or an uplink time domain resource with the time domain semi-persistent configuration cannot be updated.

24. The apparatus according to claim 23, wherein a downlink time domain resource or an uplink time domain resource with the time domain semi-persistent configuration comprises a time domain resource configured through at least one of the following:
a time domain semi-persistent time division duplex TDD uplink-downlink configuration;
a semi-persistent downlink transmission configuration configured through higher layer or radio resource control RRC signaling;
a semi-persistent uplink transmission configuration configured through higher layer or RRC signaling;
a synchronization signal block SSB configured through higher layer signaling; or
a control resource set configured by a system information block SIB in a master information block MIB and used for a TypeO-physical downlink control channel common search space PDCCH CSS.

25. User equipment UE, comprising a processor and a memory, wherein the memory stores a program or instructions executable on the processor, and the program or the instructions, when executed by the processor, implement the steps of the transmission determining method according to any one of claims 1 to 10.

26. A network side device, comprising a processor and a memory, wherein the memory stores a program or instructions executable on the processor, and the program or the instructions, when executed by the processor, implement the steps of the transmission determining method according to any one of claims 11 or 12.

27. A readable storage medium, wherein the readable storage medium stores a program or instructions, and the program or the instructions, when executed by a processor, implement the steps of the transmission determining method according to any one of claims 1 to 10, or implement the steps of the transmission determining method according to any one of claims 11 or 12.
